# EUROPEAN PATENT SPECIFICATION

(11) **EP 2 439 236 B1**
(45) Date of publication and mention of the grant of the patent: **01.10.2014**
(21) Application number: 10783152.1
(22) Date of filing: 02.06.2010
(51) Int. Cl.: C08K 5/098, C08K 5/47, C08K 3/06, C08L 21/00, C08K 5/44

(54) **RUBBER COMPOSITION**
KAUTSCHUKZUSAMMENSETZUNG
COMPOSITION DE CAOUTCHOUC

(30) Priority: 02.06.2009 JP 2009133418
(43) Date of publication of application: 11.04.2012
(73) Proprietor: Bridgestone Corporation, Tokyo 104-8340 (JP)
(72) Inventor: SATOU, Yoshitaka, Kodaira-shi Tokyo 187-8531 (JP)
(74) Representative: Oxley, Robin John George
(86) International application number: PCT/JP2010/003694
(87) International publication number: WO 2010/140364

(56) References cited:
- JP-A- 2008 062 893
- JP-A- 2008 062 893
- US-A- 3 038 888
- US-A- 3 038 888
- BUSWELL ET AL: 'Natural rubber steel cord bonding compounds with reduced sulfer loading' RUBBER WORLD vol. 173, no. 2, 1975, pages 35 - 38, XP008157713

## Description

### TECHNICAL FIELD

The present invention relates to rubber composition comprising a certain sulfenamide-containing vulcanization accelerator, particularly to rubber composition preferably used for rubber article having steel cord as reinforcing agent, such as tires and conveyor belts.

### DISCLOSURE OF THE INVENTION

Composite materials prepared by coating metal reinforcing agent, such as steel cord with a rubber composition, for the purpose of reinforcing rubber to enhance strength and durability thereof, have so far been used for rubber products to which strength is definitely required, such as automobile tires, conveyor belts, hoses and the like.

In order for this rubber-metal composite material to gain reliability by exerting high reinforcing effect, the adhesion between rubber and metal composite material requires stability and less aging action.

For producing the composite material prepared by coating metal reinforcing material with a rubber material, when the rubber and the metal adhere each other, a method for simultaneously bonding rubber-to-metal and rubber-to-rubber i.e. direct vulcanization adhesion method, is known. In this case, it is considered to be effective to use a sulfenamide-containing vulcanization accelerator which provides slow-acting property to the vulcanization reaction when vulcanization of rubber and bonding of rubber and metal are carried out at the same time. Among sulfenamide-containing vulcanization accelerators currently commercially available, for example N, N' - dicyclohexyl - 2 - benzothiazolesulfenamide (hereinafter abbreviated as "DCBS") is known as one of vulcanization accelerators that provide slow-acting property most to the vulcanization reaction. Further, when slow-acting property is required, vulcanization retarder, such as N-(cyclohexylthio) phthalimide (hereinafter abbreviated as "CTP"), is additionally used with sulfenamide-containing vulcanization accelerator.

Moreover, examples of sulfenamide-containing vulcanization accelerators besides above DCBS, include bissulfenamide represented by a specific formula (refer to patent reference 1) and benzothiazolesulfenamide-containing vulcanization accelerator derived from natural fat and oil derivedaccelerator(refer to patent reference 2), are known.

### PRIOR ARTS

### PATENT REFERENCES

Ref. 1 JP2005-139082
Ref. 2 JP2005-139239

### PROBLEMS TO BE SOLVED BY THE INVENTION

However, about sulfenamide-containing vulcanization accelerators, while these patent references 1 and 2 disclose only the effect to physical properties of rubber, there is no description or suggestion at all with respect to the effect to adhesion property. In addition, when above mentioned vulcanization retarder is combined with these prior vulcanization accelerator, such combination may cause blooming problems which exert adverse effect to the deteriorated appearances and adherence, and may exert adverse effect to the physical properties depending on the amount of vulcanization retarder combined.

Hence, the purpose of this invention is to provide rubber composition having favorable working ability and excellent adherence to the metal, wherein the retarding effect that is same as or greater than that of DCBS is observed, without the use of vulcanization retarder, such as CTP which may generate problems of lowering physical properties of rubber and blooming after vulcanization.

### MEANS FOR SOLVING THE PROBLEM

As a result of solving aforementioned problem, present inventors arrived at the present invention upon discovering their rubber composition that may generate favorable working ability and excellent adherence by adopting a certain sulfenamide-containing vulcanization accelerator that exert as same as or greater vulcanization retarding effect as DCBS.

That is, the rubber composition of the present invention comprises rubber component, sulfenamide-containing vulcanization accelerator represented by following Formula (I), sulfur and cobalt-containing component consisting of simple cobalt and/or cobalt-comprising compound. 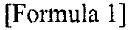 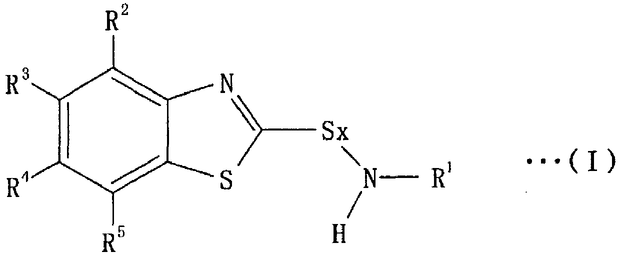 wherein R¹ is straight- or branched- chain alkyl group having from 5 to 12 carbon atoms; R² to R⁵ are hydrogen atoms, or straight- chain alkyl or alkoxy group having from 1 to 4 carbon atoms, or branched- chain alkyl or alkoxy group having from 3 to 4 carbon atoms, which may be the same or different; and x is 1 or 2.

Preferably, the rubber component comprises 0.1 to 10 parts by weight of said sulfenamide-containing vulcanization accelerator relative to 100 parts by weight of said rubber component, and more preferably further comprises 0.3 to 10 parts by weight of said sulfur relative to 100 parts by weight of said rubber component.

Additionally, preferably R² to R⁵ are all hydrogen atoms, and preferably R¹ is straight- or branched- chain alkyl group.

Preferably, the content of said cobalt-containing component is preferably 0.03 to 1 parts by weight relative to 100 parts by weight of said rubber component, and the cobalt-comprising compound is preferably organic cobalt salt.

Preferably, said rubber component comprises at least one of natural rubber and polyisoprene rubber, and preferably comprises more than 50 parts by weight of natural rubber in 100 parts by weight of said rubber component.

### EFFECT OF THE INVENTION

According to this invention, the use of vulcanization accelerator with vulcanization retarding effect that is as same as or greater than that of DCBS allows easy kneading operation due to effectively suppressed Mooney viscosity, and appropriate Mooney scorch time can be maintained. Additionally, there is no need for using vulcanization retarder as CTP that may generate problems of rubber physical properties loss, blooming, and the like after vulcanization, thus no abusive effect to the appearance and adherence of vulcanized rubber. Therefore, it is possible to obtain rubber composition having excellent adherence to the metal, while maintaining favorite working ability of producing.

Accordingly, the rubber composition of the present invention may be used preferably for rubber articles, such as tires and conveyor belts that have steel cord as reinforcing material.

### BEST MODE FOR CARRYING OUT THE INVENTION

The present invention is further explained by followings.

The rubber composition of the present invention comprises rubber component, sulfenamide-containing vulcanization accelerator represented by formula (I), sulfur and cobalt-containing component consisting of simple cobalt and/or cobalt-comprising compound.

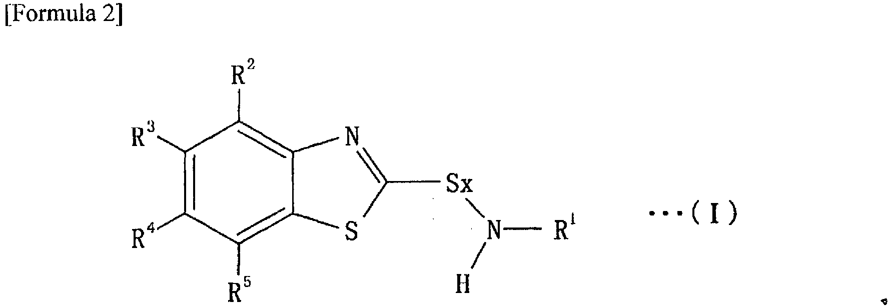

The rubber compound that can be used in the present invention is not limited as long as it is the rubber usually used for rubber products, such as tires, industrial belts, or the like. The compounds having double bonds in a main chain, such as natural rubber and synthetic rubber, can be used to make the function of the sulfonamide-containing vulcanization accelerator effective, because they can be cross-linked with sulfur. Specifically, synthetic rubber includes polyisoprene rubber, styrene butadiene copolymer, polybutadiene rubber, ethylene propylene diene copolymer, chloroprene rubber, halogenated butyl rubber, and acrylic nitrile rubber.

The rubber component comprising at least one of natural rubber and polyisoprene rubber is preferred for the adhesion to metal reinforcing material. It is also preferred with respect to durability of industrial belt rubber that it comprises natural rubber in the amount more than 50 % by weight in said rubber component of 100 % by weight. There is no specific upper limit of the proportion of the natural rubber, and it can be 100 % by weight. In this case, the remainder is synthetic rubber, preferably comprising at least one type of above mentioned synthetic rubber.

The sulfenamide-containing vulcanization accelerator represented in above Formula (I) used for the present invention has vulcanization retarding effect that is as same as DCBS, which is current sulfenamide-containing vulcanization accelerator represented by following formula (X). It inhibits the increase in Mooney viscosity, and optimal Mooney scorch time can be maintained. In addition, the sulfenamide-containing vulcanization accelerator works well for achieving the durability of the adhesion between the rubber and the metal reinforcement, such as steel cord, in the direct vulcanizing adhesion, and it is preferably used for the rubber composition for coating in thick rubber products and the like.

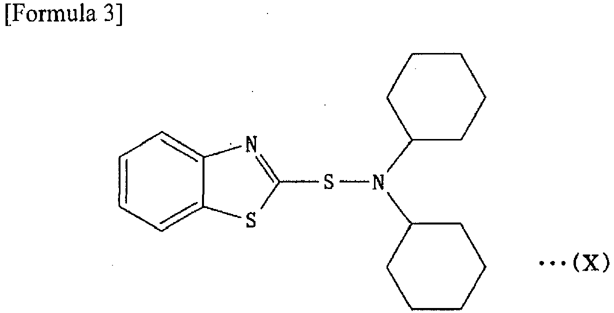

In the present invention, there are provided sulfenamide-containing vulcanization accelerators represented in above Formula (I), wherein R¹ is straight- or branched- chain alkyl group having from 5 to 12 carbon atoms. When R¹ is straight- or branched- chain alkyl group having from 5 to 12 carbon atoms, vulcanization accelerator property of above sulfenamide-containing vulcanization accelerator is favorable, and adhesion property can be enforced.

In details, R¹ includes 1,3-dimethylbutyl, 1,1-dimethyl-3-methylbutyl, 1-methyl-3,3-dimethylbutyl, 1,1-dimethyl-3,3-dimethylbutyl, n-pentyl, isoamyl (isopentyl), neopentyl, tert-amyl (tert-pentyl), 1,3-dimethylpentyl, 1,1-dimethyl-3-methylpentyl, 1-methyl-3,3-dimethylpentyl, 1,1-dimethyl-3,3-diiiiethylpentyl, n-hexyl, isohexyl, tert-hexyl, 1,3-dimethylhexyl, 1,1-dimethyl-3-methylhexyl, 1-methyl-3,3-dimethylhexyl, 1,1-dimethyl-3,3-dimethylhexyl, 1,3,5-trimethylhexyl, 1,1-dimethyl-3,3-dimethyl-5,5-dimethylhexyl, n-heptyl, isoheptyl, tert-heptyl, n-octyl, isooctyl, tert-octyl, n-nonyl, isononyl, tert-nonyl, n-decyl, isodecyl, tert-decyl, n-undecyl, isoundecyl, tert-undecyl, n-dodecyl, isododecyl and tert-dodecyl groups. Among them, straight- or branched- chain alkyl group having from 5 to 8 carbon atoms is preferable, and branched-chain alkyl group having from 5 to 8 carbon atoms is more preferable since they can achieve the effect of optimal Mooney scorch time. In specific, 1,1-dimethyl-3,3-dimethylbutyl, tert-amyl (tert-pentyl), tert-dodecyl, and tert-butyl groups are preferable, and of these, 1,1-dimethyl-3,3-dimethylbutyl and tert-butyl are optimal.

In these optimal aspects, it is presumed that when R¹, a bulky branched chain alkyl group particularly having above specified carbon atoms is present only one side and closer to -N-, Mooney scorch time tends to be more favorable. Therefore, it is considered that, for example, when R¹ in above formula (I) is 1,1-dimethyl-3,3-dimethyl butyl group, the proximity from either side of -N- may be bulkier and may create more preferable Mooney scorch time, compared with the case of DCBS wherein R1 is cyclohexyl group.iln addition, the vulcanization speed tends to be too slow when the vulcanization accelerator with 2 cyclohexyl groups bonded to the above -N- is used (in the case of DCBS), or when current sulfenamide-containing vulcanization accelerator as R¹ is a group of long chain or short branched chain other than above scope.

In sulfenamide-containing vulcanization accelerator represented in above Formula (I), x is the integer 1 or 2. When x is greater than 3, the reactivity becomes so high which may cause the decrease of the stability of sulfenamide-containing vulcanization accelerator and worse working ability.

In above formula (I), R² to R⁵ are hydrogen atom(s), straight-chain alkyl or alkoxy group having from 1 to 4 carbon atoms, or branched-chain alkyl or alkoxy group having from 3 to 4 carbon atoms, which may be the same or different. Preferably, R² and R⁴ are straight-chain alkyl or alkoxy group having from 1 to 4 carbon atoms, or branched alkyl or alkoxy group having from 3 to 4 carbon atoms. When R² to R⁵ are alkyl or alkoxy group having 1 to 4 carbon atoms, R² to R⁵ are preferred to have 1 carbon atom. Alternatively, the case wherein R² to R⁵ are all H is preferred. In either case, it is preferred with respect to easy synthesis of composition and no excess delay in vulcanization speed. In the above formula (I), specific examples of R² to R ⁵ include methyl, ethyl, n-propyl, isopropyl, n-butyl, isobutyl, sec-butyl, tert-butyl, methoxy, ethoxy, n-propoxy, isopropoxy, n-butoxy, isobutoxy, sec-butoxy, tert-butoxy groups.

In the present invention, representative examples of sulfenamide-containing vulcanization accelerator represented by the above formula (I) include N-1,3-dimethylbutylbenzothiazol-2-sulfenamide, N-1,1-dimethyl-3-methylbutylbenzothiazol-2-sulfenamide, N-1-methyl-3,3-dimethylbutylbenzothiazol-2-sulfenamide, N-(1,1,3,3-tetramethylbutyl)benzothiazol-2-sulfenamide, N-n-pentylbenzothiazol-2-sulfenamide, N-isoamylbenzothiazol-2-sulfenamide, N-tert-amylbenzothiazol-2-sulfenamide, N-tert-heptylbenzothiazol-2-sulfenamide, N-1,3-dimethylpentylbenzothiazol-2-sulfenamide, N-1,1-dimethyl-3-methylpentylbenzothiazol-2sulfenamide, N-1-methyl-3,3-dimethylpentylbenzothiazol-2-sulfenamide, N-1,1-dimethyl-3,3-dimethylpentylbenzothiazol-2-sulfenamide, N-n-hexylbenzothiazol-2-sulfenamide, N-isohexylbenzothiazol-2-sulfenamide, N-tert-hexylbenzothiazol-2-sulfenamide, N-1,3-dimethylhexylbenzothiazol-2-sulfenamide, N-1,1-dimethyl-3-methylhexylbenzothiazol-2-sulfenamide, N-1-methyl-3,3-dimethylhexylbenzothiazol-2-sulfenamide, N-1,1-dimethyl-3,3-dimethylhexylbenzothiazol-2-sulfenamide, N-1,3,5-trimethylhexylbenzothiazol-2-sulfenamide, N-1,1-dimethyl-3,3-dimethyl-5,5-dimethylhexylbenzothiazol-2-sulfenamide, N-n-heptylbenzothiazol-2-sulfenamide, N-isoheptylbenzothiazol-2-sulfenamide, N-tert-heptylbenzothiazol-2-sulfenamide, N-n-octylbenzothiazol-2-sulfenamide, N-isooctylbenzothiazol-2-sulfenamide, N-tert-octylbenzothiazol-2-sulfenamide, N-n-nonylbenzothiazol-2-sulfenamide, N-isononylbenzothiazol-2-sulfenamide, N-tert-nonylbenzotluazol-2-sulfenamide, N-n-decylbenzothiazol-2-sulfenamide, N-isodecylbenzothiazol-2-sulfenamide, N-tert-decylbenzothiazol-2-sulfenamide, N-n-undecylbenzothiazol-2-sulfenamide, N-isoundecylbenzothiazol-2-sulfenamide, N-tert-undecylbenzothiazol-2-sulfenamide, N-n-dodecylbenzothiazol-2-sulfenamide, N-isododecylbenzothiazol-2-sulfenamide, and N-tert-dodecylbenzothiazol-2-sulfenamide;

N-1,3-dimethylbutyl-4-methylbenzothiazol-2-sulfenamide, N-1,3-dimethylbutyl-4,6-dimethoxybenzothiazol-2-sulfenamide, N-1,1-dimethyyl-3-methylbutyt-4-methylbenzothiazol-2-sulfenamide, N-1,1-dimethyl-3-methylbutyl-4,6-dimethoxybenzothiazol-2-sulfenamide, N-1-methyl-3,3-dimethylbutyl-4-methylbenzothiazol-2-sulfenamide, N-1-methyl-3,3-dimethylbutyl-4,6-dimethoxybenzothiazol-2-sulfenamide, N-1,1-dimethyl-3,3-dimethylbutyl-4-methylbenzothiazol-2-sulfenamide, N-1,1-dimethyl-3,3-dimethylbutyl-4,6-dimethoxybenzothiazol-2-sulfenamide, N-n-pentyl-4-methylbenzothiazol-2-sulfenamide, N-n-pentyl-4,6-dimethoxybenzothiazol-2-sulfenamide, N-isoamyl-4-methylbenzothiaziol-2-sulfenamide, N-isoamyl-4,6-dimethoxybenzothiazol-2-sulfenamide, N-tert-amyl-4-methylbenzothiazol-2-sulfenamide, N-tert-amyl-4,6-dimethoxybenzothiazol-2-sulfenamide, N-tert-heptyl-4-methylbenzothiazol-2-sulfenamide,

N-tert-heptyl-4,6-dimethoxybenzothiazol-2-sulfenamide. They may be used alone, or may be used in combination with 2 or more thereof.

Among them, N-(1,1,3,3-tetramethylbutyl) benzothiazol-2-sulfenamide is preferred with respect to the longest Mooney scorch time and excellent adhesion property.

These sulfenamide-containing vulcanization accelerators may be used in combination with other current vulcanization accelerators, such as N-tert-butyl-2-benzothiazolesulfenamide (TBBS), N-cyclohexyl-2-benzothiazolesulfenamide (CBS), and dibenzothiazoryldisulfenamide (MBTS).

The content of above sulfenamide-containing vulcanization accelerator is in the amount of 0.1 to 10 parts by weight, preferably 0.5 to 5 parts by weight, more preferably 0.8 to 2.5 parts by weight, relative to 100 parts by weight of said rubber component. The vulcanization may not be sufficient when the content of this vulcanization accelerator is below 0.1 parts by weight. Whereas, the undesirable blooming problems may occur, when the content is more than 10 parts by weight.

A producing method of above sulfenamide-containing vulcanization accelerator preferably includes processes below.

That is, N-chloroamine preliminarily prepared by reacting corresponding amine and sodium hypochlorite, and bis(benzothiazol-2-yl)disulfide are reacted in an appropriate solvent in the presence of amine and a base. When an amine is used as the base, then the reacting solution obtained is neutralized, and the amine becomes free amine. The reacting solution is then provided to suitable post-treatments, such as filtration, washing, condensation and recrystallization, which are carried out depending on the properties of the solution, to obtain desired sulfenamide.

The base used in the present producing process includes amine in excess, tertiary amines like triethyl amine, alkali hydroxides, alkali carbonates, alkali bicarbonates, and sodium alkoxides and the like. Specifically, the method is preferred, in which an excess amine or triethylamine of a tertiary amine is used as the base to carry out the reaction, then the resulting hydrochloride salt is neutralized with sodium hydroxide to obtain desired compound, followed by recovering and reusing the amine from the filtrate.

The solvent used in the present producing process is preferably alcohol, more preferably methanol.

Sulfur used in the present invention works as vulcanizing agent, and its content is in the amount of 0.3 to 10 parts by weight, preferably 1.0 to 7.0 parts by weight, more preferably 3.0 to 7.0 parts by weight, relative to 100 parts by weight of the rubber component. It may not vulcanize sufficiently when the content of sulfur is below 0.3 parts by weight. Whereas, the aging action property of the rubber may become a undesirable problem when the content is more than 10 parts by weight.

Further, the rubber composition above comprises cobalt-containing component consisting of simple cobalt and/or cobalt-comprising compound, with respect to enhancing initial adhesion property. The above cobalt-containing component includes simple cobalt, and cobalt-comprising compound include at least one of the followings: organic cobalt salts and inorganic cobalt salts, such as cobalt chloride, cobalt sulfate, cobalt nitrate, cobalt phosphate and cobalt chromate. Among them, the use of organic cobalt salt is preferably with respect to further enhancement in the initial adhesion property. Such simple cobalt and cobalt-comprising compound can be used alone or can be used in combination with 2 or more thereof.

The above organic cobalt salt, particularly includes at least one of, for example, cobalt naphthenate, cobalt stearate, cobalt neodecanoate, cobalt resinate, cobalt versatate, and tall oil fatty acid cobalt salt. In addition, the organic cobalt can be a complex salt having its part of the organic acid substituted with boric acid. In particular, trade name "MONOBOND®" commercially available from OMG, Inc. can be used.

The (total) content of above cobalt-containing component is, as the equivalent amount of cobalt, in the amount preferably from 0.03 to 1 parts by weight, more preferably from 0.05 to 0.7 parts by weight, relative to 100 parts by weight of the rubber component (A).

When the amount of such cobalt is below 0.03 parts by weight, further adhesion cannot be exerted. Whereas, when it is more than 1 part by weight, the property after aging drastically decreases, thus not preferable.

Besides above rubber component, vulcanization accelerator, sulfur and cobalt-containing component, the rubber composition of the present invention that can be used includes compounding agent generally used in rubber products, such as tires and conveyor belts, within the range that does not inhibit the effect of the present invention.

For example, when reinforcing filler is used, it is possible to increase the fracture resistance and the ablation resistance. In particular, the reinforcing agent includes carbon black and white inorganic filler.

As carbon black, any one of channel black, furnace black, acetylene black and thermal black can be used depending on the method of production, including for example, SRF, GPF, FEF, HAF, ISAF, and SAF. Carbon black having iodine adsorption (IA) in the amount more than 60 mg/g and dibutyl phthalate oil absorption (DBP) in the amount more than 80 mL / 100 g is preferable.

On the other hand, preferable white inorganic filler includes silica and compound represented by general formula (Y):

mM₁•xSIO_{y}•zH₂O (Y)

(wherein in formula (Y), M₁ may be selected from at least one of the metals selected from the group comprising aluminum, magnesium, titanium and calcium, and the metal oxidize, hydroxide and hydrate thereof; m, x, y and z are integers from 1 to 5, integers from 0 to 10, integers from 2 to 5, and integers from 0 to 10, respectively). Further, it may comprise metals, such as calcium, sodium, iron and magnesium, elements, such as fluorine and groups, such as NH₄-.

Specific examples of reinforcing filler include hydrated alumina (Al₂O₃•H₂O), aluminum hydroxides [Al(OH)₃], such as gibbsite, bayerite; magnesium hydroxide [Mg(OH)₂], magnesium oxide (MgO), talc (3MgO•4SiO₂•H₂O), attapulgite (5MgO•8SiO₂•9H₂O), titan white (TiO₂), titan black (TiO₂ₙ₋₁), calcium oxide (CaO), calcium hydrate [Ca(OH)₂], aluminum magnesium oxide (MgO•Al₂O₃), clay (Al₂O_{3•}2SiO₂), kaolin (Al₂O₃•2SiO₂•2H₂O), pyrophyllite (Al₂O₃-4SiO₂•H₂O), bentonite (Al₂O₃•4SiO₂•2H₂O), aluminum silicate (Al₂SiO₅, Al₄•3SiO₄•5H₂O and), magnesium silicate (Mg₂SiO₄, MgSiO₃ and etc.), calcium silicate (Ca₂•SiO₄ and), aluminum calcium silicate (Al₂O₃•CaO•2SiO₂ and), magnesium calcium silicate (CaMgSiO₄), various zeolite, feldspar, mica and montmorillonite and the like. M₁ is preferably aluminum, and more preferably the filler is selected from aluminas and clays.

Among those that are represented by above formula (Y), aluminas are represented by below formula (Z).

Al₂O₃•nH₂O (given n in the formula is from 0 to 3) (Z)

Clays include clay (Al₂O₃•2SiO₂), kaolin (Al₂O₃•2SiO₂•2H₂O), pyrophyllite (Al₂O₃-4SiO₂•H₂O), bentonite (Al₂O₃•4SiO₂•2H₂O), and montmorillonite.

Among those white inorganic filler, silica and aluminum hydroxide are preferable, and silica is more preferable. Here, any of commonly used silica as current rubber reinforcement can be used, which is arbitrary selected from, for example wet silica (hydrous silica), dry silica (anhydrated silica) and various silica salt. Among them, synthetic silica (wet silica) obtained using sedimentation method is preferably used.

These reinforcing filler can be combined with the ratio of 10 to 120 parts by weight, preferably 20 to 100 parts by weight, relative to 100 parts by weight of said rubber component.

Further, when white inorganic filler like silica is used as above reinforcing filler, if required, coupling agent can be combined. The coupling agent available is not specifically restricted, which is optionally selected from various known coupling agents, but among them silane-containing coupling agent is preferred. Examples of the silane-containing coupling agents include bis[3-(triethoxysilyl)propyl]-tetrasulfide, bis[3-(trimethoxysilyl)propyl]-tetrasulfide, bis[3-(methyldimethoxysilyl)propyl]-tetrasulfide, bis[3-(triethoxysilyl)ethyl]-tetrasulfide, bis[3-(triethoxysilyl)propyl]-disulfide, bis[3-(trimethoxysilyl)propyl]-disulfide, bis[3-(triethoxysilyl)propyl]-trisulfide, (3-mercaptopropyl)trimethoxysilane, (3-mercaptopropyl)triethoxysilane, vinyltriethoxysilane, vinyltrimethoxysilane, (3-aminopropyl)triethoxysilane, (3-aminopropyl)trimethoxysilane, (3-mercaptopropyl)methyldimethoxysilane, γ-glycidoxypropyltrimethoxysilane, γ-glycidoxypropylmethyldiethoxysilane, 3-trimethoxysilylpropyl-N,N-dimethylcarbamoyl-tetrasulfide, 3-trimethoxysilylpropyl benzothiazolyl tetrasulfide, and 3-(trimethoxysilyl)propyl methacryloyl monosulfide.

The above coupling agents may be used alone, or may be used in combination with 2 or more thereof. Moreover, considering compounding effect and economic efficiency, its quantity compounded is in the amount of 1 to 20 weight %, preferably 5 to 20 weight %, relative to said white inorganic filler.

Further, other compounding agents besides above include, for example softeners, and anti-aging agents, and they can be arbitrary compounded depending on its use.

The rubber composition of the present invention can be produced from each of the above components by kneading them together, for example, with a Banbury mixer or a kneader. In addition, when tires for automobile, truck, bus, two-wheel vehicle and the like are produced using the rubber composition of the present invention, it may be performed by the method, for example preparing bead filler member or side-reinforcing rubber for run-flat tires with an extruder, a calendar and the like, then preparing green tires by coalescing said members with the other members around a mold drum. Then, said green tire is set in a tire mold and vulcanized with applied pressure from the inside. In addition, nitrogen and inert gas can be used for tire inflation as well as air. As mentioned above, rubber composition can be used not only for tires having steel cord as reinforcing material, but also preferably used for rubber articles, such as conveyor belt.

### EXAMPLE

The following specifically illustrates present invention based on Examples.

### [Preparation: Synthesis of N-(1,1,3,3-tetramethylbutyl)benzothiazole-2-sulfenamide (vulcanization accelerator 1)]

A 1000 mL four-neck flask was charged with DM-P (133.0g, 0,4mol), Noigen ET (200mg) and 200 ml of water, then cooled to 10°C. After tert-octylamine (113.7g, 0.88mol) was added dropwise within 1 hour, it was heated to 40 °C, and stirred for 1 hour. Accordingly, 50mL of toluene was added, 35% hydrogen peroxide solution (42.8g, 0.44mol) was added dropwise within 40 minutes, and stirred for 1 hour. Then, 12% of hypochlorous acid solution (273g, 0.44mol) was added dropwise within 1 hour. After 200mL of toluene was charged and mixed, it was separated to two phases. The upper layer was obtained and condensed to the weight of 240.1 g with a rotary evaporator under reduced pressure. This was preceded by charging 450mL of acetone, heating to 50 °C and thermal filtering. Accordingly, it was cooled to room temperature, and deposited crystal was filtered. This was followed by heat drying at 40 °C for 12 hours, and N-(1,1,3,3-tetramethylbutyl) benzothiazol-2-sulfenamide (vulcanization accelerator 1) (183.7g, 0.62mol, 78% yield, melting point 103.7~104.4 °C) represented by below formula, which was specified substance of the white crystal was obtained.

¹H-NMR (CDCl₃) d (ppm): 7.70 - 7.80 (m, 2H), 7.38(t, 1H, 7.6Hz), 7.25(t, 1H, 7.6Hz), 3.52 (s, 1H), 1.59 (s, 2H), 1.32 (s, 6H), 1.07 (s, 9H).

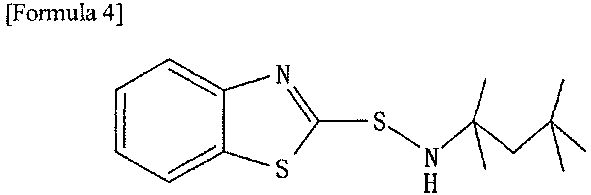

### [Example 1, Comparative Examples 1~2]

Unvulcanized rubber compositions were prepared by kneading and mixing rubber components, vulcanization accelerators, sulfur and the other compounding ingredients in accordance with formulation shown in table 1, and evaluated according to the method below. The result is shown in Table 1.

### «Methods for evaluating Mooney viscosity and Mooney scorch time»

The evaluations were performed in accordance with JIS K 6300-1:2001.

In the evaluations, values for Comparative Example 1 were set to 100. In Mooney viscosity, a smaller value shows that the working ability while kneading is more favorable. In Mooney scorch time, a large value shows that the working ability after kneading is more favorable.

### <<Heat-resistance of adhesion>>

Three of steel cords (outer diameter 0.5mm x length 300mm) brass plated (Cu: 63 weight %, Zn: 37 weight %) were arranged in parallel so that intervals between two adjacent steel cords were 10mm. Accordingly, these steel cords were coated with each rubber composition from both of upper side and lower side. Then, they were vulcanized under condition of 160 °C for 20 minutes, and samples were prepared.

Each sample obtained was heated in a gear oven at 100°C, and left for 15 days or 30 days followed by pulling out the steel cord to visually observe the coating condition of the rubber, and indicated as index for each heat resistance of adhesion by showing from 0 to 100% for each resistant adherence for each sample obtained in accordance with ASTM-D-2229. When a value is larger, it shows that the heat resistance of adhesion is more excellent.

**[Table 1]**

| | | Example 1 | Comparative Example 1 | Comparative Example 2 |
|---|---|---|---|---|
| Natural rubber | | 100 | 100 | 100 |
| HAF carbon black | | 60 | 60 | 60 |
| Zinc oxide | | 8 | 8 | 8 |
| Antioxidant *1 | | 2 | 2 | 2 |
| Vulcanization accelerator A *2 | | | 1 | |
| Vulcanization accelerator B *3 | | | | 1 |
| Vulcanization accelerator 1 | | 1 | | |
| Sulfur | | 5 | 5 | 5 |
| Cobalt salts of fatty acid | | 1 | 1 | 1 |
| Assessment | | | | |
| Mooney viscosity (ML₁₊₄) | | 95 | 100 | 100 |
| Mooney scorch time (t₃) | | 105 | 100 | 70 |
| Heat resistant adhesion (%) | 15 days degradation | 75 | 70 | 60 |
| | 30 days degradation | 45 | 40 | 20 |

| | | | | |
|---|---|---|---|---|
| The unit for numerical values of each component in rubber composition is parts by weight, except for assessment section. *1; N-phenyl-N'-(1,3-dimethylbutyl)-p-phenylendiamine (Noccler 6C®, available from Ouchi Shinko Chemical Industrial Co. Ltd) *2; N,N'-dicyclohexyl-2-benzothiazyl sulfenamide (Noccelar DZ®, available from Ouchi Shinko Chemical Industrial Co. Ltd) *3; N-cyclohexyl-2-benzothiazolesulfenamide (Noccelar CZ®, available from Ouchi Shinko Chemical Industrial Co. Ltd) *4; Product name: MONOBOND C22.5® OMG, Inc., content: 22.5% by weight | | | | |

As it is apparent from the result in table 1 above, Example 1 comprising the specific vulcanization accelerator and sulfur described above is excellent in working ability and heat resistant adhesion when comparing it with Comparative Example 1 and 2, which comprise current vulcanization accelerator (DCBS) and sulfur.

## Claims

1. A rubber composition comprising rubber component, sulfenamide-containing vulcanization accelerator represented in Formula (I), sulfur, and cobalt-containing component consisting of simple cobalt and/or cobalt-comprising compound; 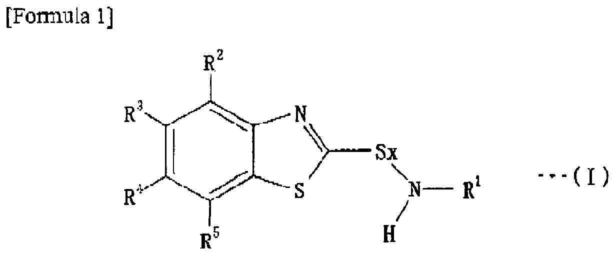 wherein R¹ is selected from at least one of 1,1-dimethyl-3,3-dimethylbutyl, tert-pentyl, tert-butyl and tert-dodecyl groups; R² to R⁵ are hydrogen atoms, or straight- chain alkyl or alkoxy group having from 1 to 4 carbon atoms, or branched- chain alkyl or alkoxy group having from 3 to 4 carbon atoms, which may be the same or different; and x is 1 or 2.

2. A rubber composition according to claim 1, comprising 0.1 to 10 parts by weight of said sulfenamide-containing vulcanization accelerator relative to 100 parts by weight of said rubber component.

3. A rubber composition according to claim 1 or 2, comprising 0.3 to 10 parts by weight of said sulfur relative to 100 parts by weight of said rubber component.

4. A rubber composition according to any one of claims 1 to 3, wherein R² to R⁵ in above Formula (I) are all hydrogen atoms.

5. A rubber composition according to any one of claims 1 to 4, wherein the content of said cobalt-containing component is in the amount of 0.03 to 1 parts by weight as the equivalent amount of cobalt, relative to 100 parts by weight of said rubber component.

6. A rubber composition according to any one of claims 1 to 5, wherein said cobalt-comprising compound is organic cobalt salt.

7. A rubber composition according to any one of claims 1 to 4, wherein said rubber component comprises at least one of natural rubber and polyisoprene rubber.

8. A rubber composition according to claim 7, comprising at least 50 weight % of the natural rubber in 100 weight % of said rubber component.

## Patentansprüche

1. Eine Kautschukzusammensetzung, die eine Kautschukkomponente, einen Sulfenamid-enthaltenden Vulkanisationsbeschleuniger nach Formel (I), Schwefel und eine Kobalt-enthaltende Komponente, umfassend einfachen Kobalt oder eine Kobalt-enthaltende Verbindung, umfasst; 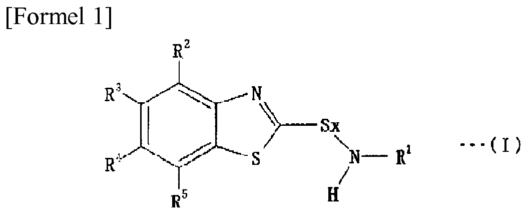 wobei R¹ mindestens einer der Restgruppen 1,1-Dimethyl-3,3-dimethylbutyl, tert-Pentyl, tert-Butyl und ter-Dodecyl ist; R² bis R⁵ Wasserstoffatome oder geradkettige Alkyl- oder Alkoxy-Ketten mit 1 bis 4 Kohlenstoffatomen oder verzweigte Alkyl- oder Alkoxy-Ketten mit 3 oder 4 Kohlenstoffatomen sind, wobei diese Reste gleich oder unterschiedlich sein können; und x 1 oder 2 ist.

2. Eine Kautschukzusammensetzung nach Anspruch 1, die 0,1 bis 10 Gewichtsanteile des genannten Sulfenamid-enthaltenden Vulkanisationsbeschleuniger bezogen auf 100 Gewichtsanteile der genannten Kautschukverbindung umfasst.

3. Eine Kautschukzusammensetzung nach Anspruch 1 oder 2, die 0,3 bis 10 Gewichtsanteile des genannten Schwefels bezogen auf 100 Gewichtsanteile der genannten Kautschukverbindung umfasst.

4. Eine Kautschukzusammensetzung nach einem der Ansprüche 1 bis 3, wobei R² bis R⁵ in der obigen Formel (I) alle Wasserstoffatome sind.

5. Eine Kautschukzusammensetzung nach einem der Ansprüche 1 bis 4, wobei der Anteil der Kobalt-enthaltenden Verbindung 0,03 bis 1 Kobalt-äquivalente Gewichtsanteile bezogen auf 100 Gewichtsanteile der genannten Kautschukverbindung umfasst.

6. Eine Kautschukzusammensetzung nach einem der Ansprüche 1 bis 5, wobei die genannte Kobalt-enthaltende Verbindung ein organisches Kobalt-Salz ist.

7. Eine Kautschukzusammensetzung nach einem der Ansprüche 1 bis 4, wobei die genannte Kautschukverbindung mindestens einen Kautschuk aus Naturkautschuk und Polyisopren-Kautschuk umfasst.

8. Eine Kautschukzusammensetzung nach Anspruch 7, die mindestens 50 Gew.-% des Naturkautschuks bezogen auf 100 Gew.-% der genannten Kautschukverbindung umfasst.

## Revendications

1. Composition de caoutchouc comprenant un composant de caoutchouc, un accélérateur de vulcanisation contenant du sulfène amide représenté en formule (I), du soufre, et un composant contenant du cobalt constitué de cobalt simple et/ou d'un composé comprenant du cobalt; 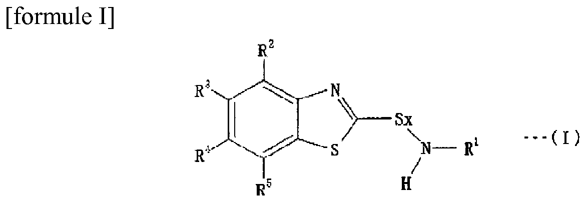 dans laquelle R¹ est sélectionné parmi au moins l'un des groupes 1,1-diméthyl-3,3-diméthylbutyle, *tert*-pentyle, *tert*-butyle et *tert*-dodécyle; R² à R⁵ sont des atomes d'hydrogène, ou un groupe alkyle ou alcoxy à chaîne linéaire ayant de 1 à 4 atome(s) de carbone, ou un groupe alkyle ou alcoxy à chaîne ramifiée ayant de 3 à 4 atomes de carbone, qui peuvent être identiques ou différents; et x a la valeur de 1 ou 2.

2. Composition de caoutchouc selon la revendication 1, comprenant 0,1 à 10 partie(s) en poids dudit accélérateur de vulcanisation contenant du sulfène amide par rapport à 100 parties en poids dudit composant de caoutchouc.

3. Composition de caoutchouc selon la revendication 1 ou 2, comprenant 0,3 à 10 partie(s) en poids dudit soufre par rapport à 100 parties en poids dudit composant de caoutchouc.

4. Composition de caoutchouc selon l'une quelconque des revendications 1 à 3, dans laquelle R² à R⁵ dans la formule (I) ci-dessus sont tous des atomes d'hydrogène.

5. Composition de caoutchouc selon l'une quelconque des revendications 1 à 4, dans laquelle la teneur dudit composant contenant du cobalt se situe dans la quantité de 0,03 à 1 partie(s) en poids comme quantité équivalente de cobalt, par rapport à 100 parties en poids dudit composant de caoutchouc.

6. Composition de caoutchouc selon l'une quelconque des revendications 1 à 5, dans laquelle ledit composé comprenant du cobalt est du sel de cobalt organique.

7. Composition de caoutchouc selon l'une quelconque des revendications 1 à 4, dans laquelle ledit composant de caoutchouc comprend au moins l'un parmi le caoutchouc naturel et le caoutchouc de polyisoprène.

8. Composition de caoutchouc selon la revendication 7, comprenant au moins 50 % en poids du caoutchouc naturel dans 100 % en poids dudit composant de caoutchouc.
